# EUROPÄISCHE PATENTSCHRIFT

(11) **EP 1 516 499 B1**
(45) Veröffentlichungstag und Bekanntmachung des Hinweises auf die Patenterteilung: **03.12.2008**
(21) Anmeldenummer: 03756941.5
(22) Anmeldetag: 20.05.2003
(51) Int. Cl.: H04Q 7/22, H04Q 7/38, G08C 17/02, G08G 1/09

(54) **VERFAHREN UND VORRICHTUNG ZUM AUFBAU EINER KOMMUNIKATIONSVERBINDUNG ZWISCHEN EINER ZENTRALE UND EINEM ENDGERÄT**
METHOD AND DEVICE FOR ESTABLISHING A COMMUNICATION CONNECTION BETWEEN AN EXCHANGE AND A TERMINAL
PROCEDE ET DISPOSITIF POUR ETABLIR UNE CONNEXION DE COMMUNICATION ENTRE UN CENTRAL ET UN TERMINAL

(30) Priorität: 10.06.2002 DE 10225784
(43) Veröffentlichungstag der Anmeldung: 23.03.2005
(73) Patentinhaber: ROBERT BOSCH GMBH, 70442 Stuttgart (DE)
(72) Erfinder: SONNENREIN, Thomas, 31167 Bockenem (DE); BAUER, Norbert, 97616 Bad Neustadt (DE); ATTIG, Joachim, 31135 Hilsdesheim (DE)
(86) Internationale Anmeldenummer: PCT/DE2003/001621
(87) Internationale Veröffentlichungsnummer: WO 2003/105514

(56) Entgegenhaltungen:
- WO-A-01/81107
- WO-A2-95/34998
- DE-A- 19 625 002
- DE-A- 19 832 498
- DE-A- 19 920 041
- US-A- 5 734 981

## Beschreibung

### Stand der Technik

Die Erfindung betrifft ein Verfahren und Vorrichtung zum Aufbau einer Kommunikationsverbindung zwischen einer Zentrale und einem Endgerät, wobei letzteres insbesondere in einem Kraftfahrzeug angeordnet ist.

Ein solches Verfahren bzw. solche Vorrichtungen sind aus der DE 100 26754 A1 in Verbindung mit der Ferndiagnose, der Fernsteuerung, etc. wenigstens einer Komponente bzw. wenigstens einer Fahrzeugfunktion eines Kraftfahrzeugs bekannt. Dort wird vorgeschlagen, dass über ein mobiles Kommunikationsnetz und/oder über ein Datennetz (beispielsweise Internet) eine Verbindung zum Endgerät bzw. zu einer an das Endgerät angeschlossenen Verarbeitungseinheit aufgebaut wird und über diesen Zugriffsweg eine Ferndiagnose bzw. eine Fernsteuerung stattfindet. Der Verbindungsaufbau erfolgt dabei durch den Nutzer (z.B. den Besitzer des Kraftfahrzeugs) über das Datennetz und/oder das mobile Kommunikationsnetz zum mobilen Telekommunikationsendgerät hin. Eine konkrete Realisierung des Verbindungsaufbaus unter Berücksichtigung von Verfügbarkeit, Zuverlässigkeit, Schnelligkeit und/oder Sicherheit des Verbindungsaufbaus werden nicht angegeben.

Das US-Patent 5,734,981 zeigt ein System, in welchem verschiedene Optionen beschrieben sind, die eine Kommunikationsverbindung zwischen einer mobilen Einheit und einer Plattform oder Server aufgebaut werden kann. Die einzige Option, in welcher die Plattform den Anstoß zum Kommunikationsaufbau unternimmt, zeigt, dass diese Plattform eine Rückrufnachricht über das Datennetzwerk absendet. Die mobile Einheit baut dann eine Verbindung zwischen der Plattform und sich selbst über ein anderes Netzwerk, das Sprachverbindungsnetzwerk, auf.

Die WO 95/34998 A zeigt ein Verfahren zum Aufbau einer Kommunikationsverbindung zwischen einer Zentrale und einem Endgerät, welches vorzugsweise in einem Kraftfahrzeug angeordnet ist, wobei das Endgerät einen Anruf zur Aufforderung zum Aufbau einer Verbindung empfängt, dass Endgerät ferner auf der Basis von Daten, die mit dem Anruf geliefert werden, überprüft, ob der Anruf dazu bestimmt ist und / oder berechtigt ist, eine Verbindung mit der Zentrale aufzubauen, wobei das Endgerät eine Kommunikationsverbindung zu der Zentrale automatisch aufbaut, wenn die Überprüfung ergeben hat, dass der Anruf dazu bestimmt ist und / oder berechtigt ist, eine Verbindung zur Zentrale zu initiieren und wobei über die aufgebaute Kommunikationsverbindung Daten übertragen werden.

### Vorteile der Erfindung

Die Lösung, dass das Endgerät mit Anbindung an ein Telefonnetz durch einen eingehenden Anruf von einem Zentralrechner dazu veranlasst werden, eine Verbindung zu einem Zentralrechner aufzubauen und eine Kommunikation mit diesem durchzuführen, hat eine Reihe von Vorteilen.

In besonders vorteilhafter Weise wird die Zuverlässigkeit, die Schnelligkeit und die Verfügbarkeit des Verbindungsaufbaus verbessert. Dadurch dass der Verbindungsaufbau durch einen telefonischen Anruf des Zentralrechners beim Endgerät initiiert wird, ist sichergestellt, dass der Verbindungsaufbau überall dort funktioniert, wo eine telefonische Erreichbarkeit gewährleistet ist. Im Gegensatz zu einer Vorgehensweise, in der eine inhaltliche Nachricht zum Verbindungsaufbau übermittelt wird, ist diese Art des Verbindungsaufbaus daher zuverlässiger und schneller, da bei Nichterreichbarkeit des Teilnehmers eine sofortige Rückmeldung erfolgt. Probleme einer verspäteten Zustellung einer inhaltlichen Nachricht (z.B. SMS) an den Empfänger, beispielsweise wenn sich Zentrale und Endgerät in verschiedenen Ländern aufhalten, deren Mobilfunkbetreiber kein Roaming-Abkommen für Nachrichten haben oder von denen einer den speziellen Nachrichtendienst nicht unterstützt, treten nicht auf.

Die beschriebene Art des Verbindungsaufbaus hat ferner den Vorteil eines erheblichen Sicherheitsgewinns. Das Endgerät ist in der Lage, die eingehenden Anrufe zu überprüfen und daraus abzuleiten, ob diese Anrufe dazu bestimmt und/oder berechtigt sind, eine Verbindung zu initiieren oder nicht.

Dieser Sicherheitsgewinn trägt besonders dazu bei, dass mit Hilfe der geschilderten Art des Verbindungsaufbaus eine Ferndiagnose, Fernwartung, Fernsteuerung und/oder ein Software-Download in Verbindung mit einem Kraftfahrzeug sicher und zuverlässig vonstatten gehen kann.

Darüber hinaus werden in vorteilhafter Weise Kosten und Aufwand eingespart, da zum einen der die Kommunikationsverbindung initiierende Anruf nach Abschluss der Überprüfung beendet wird, somit ohne Informationsaustausch stattfindet, zum anderen zur Durchführung des Verbindungsaufbaus lediglich eine im Fahrzeug ohnehin vorhandene Telefoneinheit, beispielsweise eine Mobiltelefoneinheit, benötigt wird.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt dabei ein Übersichtsbild zur Darstellung der Verbindungsaufforderung vom Zentralrechner (Server) zum Endgerät (Client), während in Figur 2 ein Übersichtsbild zur Darstellung des Kommunikationsaufbaus vom Client zum Server dargestellt ist. In den Figuren 3 und 4 sind Flussdiagramme skizziert, welche die Funktionsweise von Server bzw. Client näher verdeutlichen.

### Beschreibung von Ausführungsbeispielen

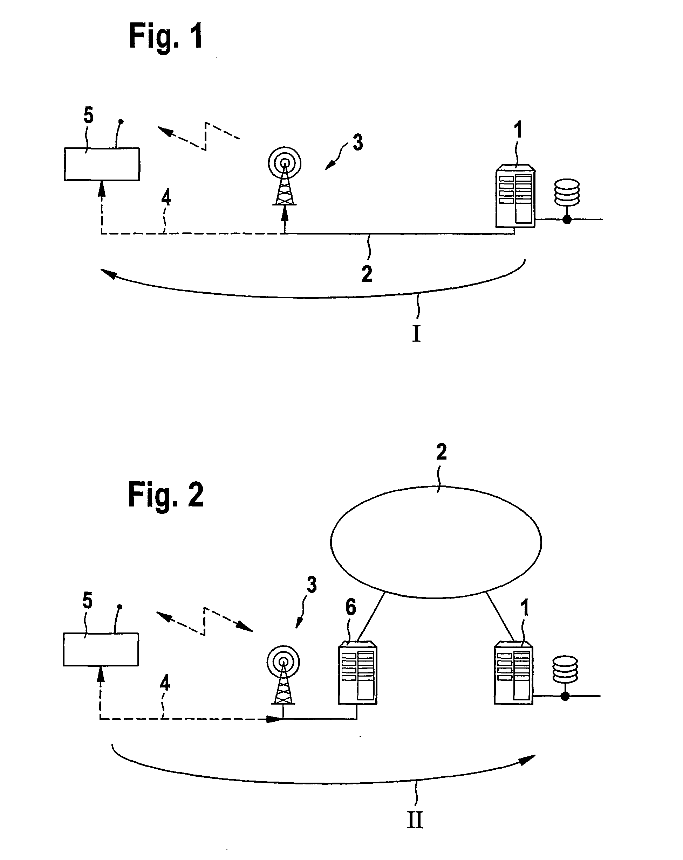

Figur 1 zeigt einen Zentralrechner (Server) 1, welcher über eine Leitung 2 mit den Anlagen 3 eines Mobilfunkbetreibers verbunden ist. Über ein Mobilfunknetz 4 ist ein Endgerät 5 erreichbar. Figur 1 stellt die Situation der Verbindungsaufforderung durch den Server an das Endgerät 5 dar. Dies ist in Figur 1 durch den Pfeil I symbolisiert. Dabei soll das Endgerät 5, das im bevorzugten Ausführungsbeispiel mobil ist und insbesondere in einem Kraftfahrzeug verbaut ist, vom Server aus dazu veranlasst werden, eine Verbindung, insbesondere eine Kommunikationsverbindung, zum Server aufzubauen. Dazu ruft der Server 1 über das Mobilfunknetz 4 das Endgerät an. Der Anruf wird durch eine Servereingabe oder durch eine entsprechende externe Anfrage an den Server, beispielsweise über Mobilfunk, Internet, über die Tastatur des Servers, etc. ausgelöst. In diesem Fall sind dem Server sind die Telefonnummern des Endgeräts oder der Endgeräte, die dem Anfragenden zugeordnet sind, bekannt. Entsprechende Informationen sind z.B. in einer Datenbank abhängig von der Telefonnummer des Anrufenden oder abhängig von einem Identifikationscode oder abhängig von einem übermittelten Befehl abgelegt.

Im bevorzugten Ausführungsbeispiel wählt der Server 1 die zugeordnete Telefonnummer bzw. die zugeordneten Telefonnummern nach Maßgabe der externen Anforderung aus, indem er in einer in einem Speicher abgelegten Datenbank oder Tabelle abhängig von der Nummer des erhaltenen Anruf bzw. vom erhaltenen externen Befehl (z.B. via Internet, SMS, etc.) bzw. abhängig vom anfordernden User eine Rufnummer auswählt. Der Server ruft dann über das Netzwerk oder über eine direkte Verbindung und einen Einwahlknoten die ausgewählte Rufnummer, d.h. das dadurch identifizierte Endgerät über ein Mobilfunknetz an. Das Endgerät empfängt den Anruf und unterzieht diesen einer Prüfung, beispielsweise dahingehend, welcher Art von Anruf er zuzuordnen ist. So kann beispielsweise eine Unterscheidung zwischen einem normalen Gesprächsanruf und einem Anruf, der einen Verbindungsaufbau zu einem Server nach sich ziehen soll, erfolgen. In einem bevorzugten Ausführungsbeispiel wird diese Unterscheidung anhand der Absendertelefonnummer vorgenommen, das heißt es wird überprüft, ob die übermittelte Telefonnummer des Anrufers mit einer im Endgerät als für eine Anforderung für einen Verbindungsaufbau eingetragene, gespeicherte Telefonnummer übereinstimmt. Trifft dies nicht zu, handelt es sich um einen gewöhnlichen Telefonanruf und das Gespräch wird an die Telefoneinheit des Endgerätes 5 weitergegeben.

Handelt es sich um einen Anruf, mit dem ein Verbindungsaufbau angefordert wird, so beendet das Gerät entweder den eingehenden Anruf (ohne dass eine Verbindung hergestellt wird) sofort und beginnt mit dem Verbindungsaufbau oder es nimmt den Anruf automatisch an, um noch zusätzliche Überprüfungen und/oder einen Datenaustausch vorzunehmen oder eine Empfangsbestätigung abzusenden. Anschließend wird auch hier die Verbindung abgebrochen und eine neue Verbindung vom Client (Endgerät) zur Zentrale (Server) hin aufzubauen.

Alternativ oder in Kombination zur oben beschriebenen Erkennung der Absendertelefonnummer wird zur Kennzeichnung der einen Verbindungsaufbau anfordernden Telefonanrufe ein besonderer Typ von Anrufen verwendet. Bei Mobilfunkendgeräten wird ein spezieller Datacall oder Datencall

durchgeführt, den das Gerät beim Empfang als solchen erkennt. Darunter wird im Folgenden eine Art von Anrufen verstanden, die über den normalen Voice Call hinaus ein Endgerät (z.B. ein GSM-Endgerät) unterscheiden kann, wenn ein solcher Anruf eingeht. Wie diese verschiedenen Anrufe aufgebaut sind und sich unterscheiden ist in der jeweiligen Mobilfunkspezifikation (z.B. der Technical Specification von GSM) zu entnehmen. Einen solchen Anruf wertet das Endgerät 5 dann als Anforderung für einen Verbindungsaufbau, bricht die aktuelle Verbindung ab (oder führt die oben dargestellten weiteren Schritte durch und bricht dann die Verbindung ab) und beginnt mit dem erneuten Verbindungsaufbau zum Server.

In den vorstehend beschriebenen Ausführungsbeispielen wird der den Verbindungsaufbau anfordernde Anruf des Servers vom Client abgebrochen. In einer anderen Ausführung wird der Anruf vom Server beendet. Beendet der Client den Anruf, so ist im Server davon auszugehen, dass er vom Endgerät empfangen und verstanden wurde, auch ohne dass ein Endgerät den Anruf explizit annehmen muss, um beispielsweise eine Bestätigung zu übermitteln. Ist vorgesehen, dass der Server den Anruf beendet, so wird er dies bei Übermittlung einer Bestätigung vom Endgerät oder nach Ablauf einer bestimmten Zeit ohne Bestätigung des Endgerätes vornehmen. Im ersten Fall erwartet der Server einen Verbindungsaufbau vom Client, im zweiten Fall sendet der Server eine erneute Aufforderung und/oder gibt eine Fehlermeldung an den von extern anfordernden Nutzer weiter.

Hat das Endgerät einen Anruf als Aufforderung zum Verbindungsaufbau erkannt, so beginnt es automatisch, eine neue Verbindung zum Server aufzubauen. Dies ist in Figur 2 skizziert und durch den Pfeil II symbolisiert. Der Verbindungsaufbau erfolgt in einem Ausführungsbeispiel durch Einwahl in ein Netzwerk. Nimmt der Server den Anruf an, so ist die Kommunikation angestoßen und wird beispielsweise als Frage-Antwort-Kommunikation (Standard-Client-Server-Kommunikation) weitergeführt. In dem in Figur 2 dargestellten Beispiel sendet das Endgerät 5 über das Mobilfunknetz 3, 4 über einen Einwahlknoten 6 und eine direkte Verbindung oder ein Netzwerk 2 eine entsprechende Anfrage zum Verbindungsaufbau an den Server 1. Die dazu notwendige Telefonnummer ist entweder im Endgerät vorbestimmt, das heißt fest gespeichert, oder wird, falls es bei dem vorhergehenden Anruf zu einem Kommunikationsaustausch gekommen ist, vom Server an das Endgerät übergeben. In einem Ausführungsbeispiel sind im Endgerät 5 mehrere Verbindungen abgelegt, von denen eine abhängig von der im vorhergehenden Anruf übermittelten Telefonnummer oder einer entsprechenden Information aufgebaut wird. Sobald die grundlegende Verbindung (Einwahlverbindung) besteht, sucht das Endgerät den Server 1 auf.
Mit "aufsuchen" ist dabei das gemeint, was z. B. auch ein Browser tut, wenn man nach erfolgter Einwahl in das Internet bei ihm eine www-Adresse eingibt und Return drückt. Er stellt eine Anfrage an den durch die Adresse bestimmten Server (und erhält eine Antwort von diesem zurück). Mit "mehrere Verbindungen", die im Endgerät abgelegt sein können sind auch in erster Linie verschiedene Server(adressen) gemeint, die über das Netzwerk angefragt werden können, abhängig z. B. von der im vorhergehenden Anruf übermittelten Telefonnummer. In einer anderen Ausführung umfasst dies auch eine Lösung, nach der der Client eine von mehreren verschiedenen Einwahlverbindungen verwendet, abhängig vom vorhergehenden, eingegangenen Anruf des Servers.
Eine Client-Server-Verbindung ist damit etabliert und es folgt eine durch Anfrage und Antwort charakterisierte Client-Server-Kommunikation.

Im bevorzugten Ausführungsbeispiel handelt es sich bei dem Endgerät 5 um ein mit einem Mobilfunkendgerät ausgestattetes Gerät, welches in einem Kraftfahrzeug verbaut ist. Die dargestellte Kommunikationsverbindung und deren Aufbau wird dabei insbesondere in Verbindung mit der Fernsteuerung von wenigstens einer Komponente und/oder einer Funktion des Kraftfahrzeugs und/oder im Rahmen der Ferndiagnose zur Übermittlung von Diagnoseinformationen des Kraftfahrzeugs eingesetzt.

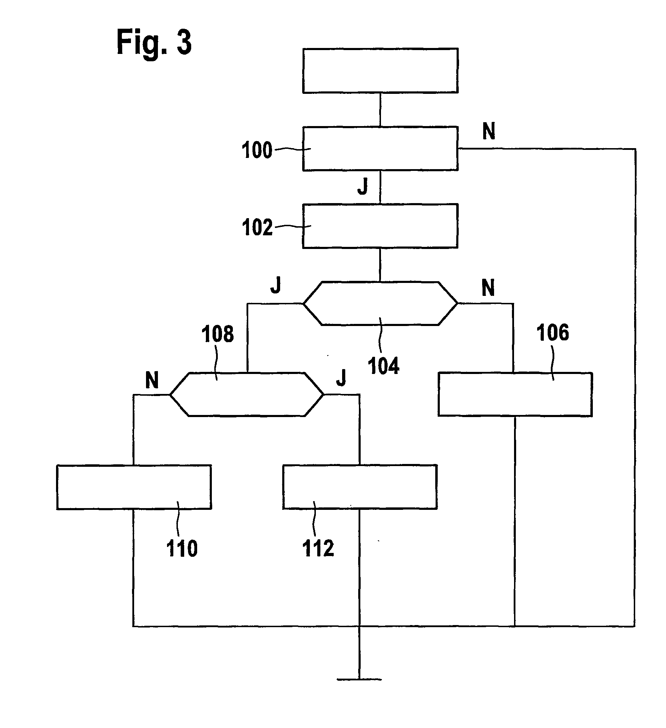

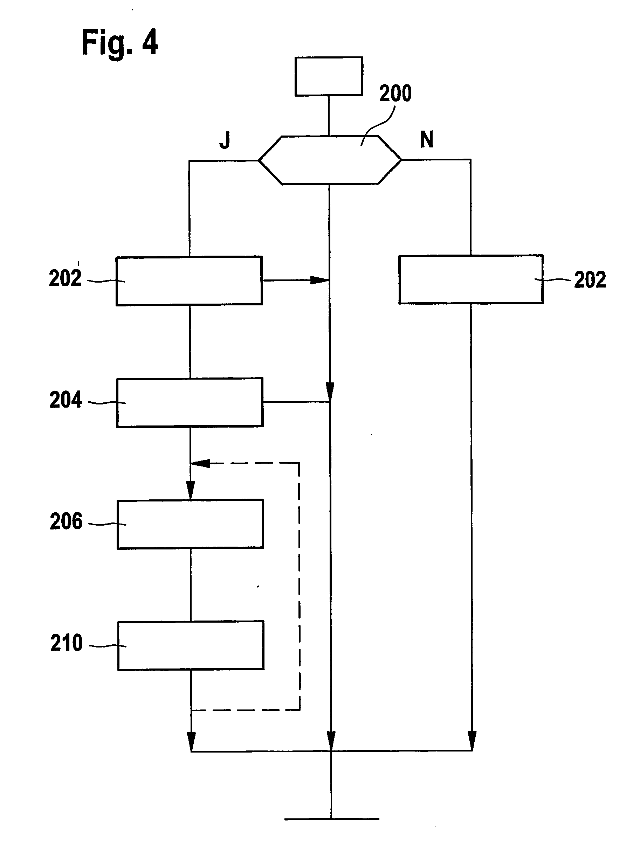

Die oben dargestellten Verfahrensweisen werden im Endgerät 5 und im Server 1 mittels Programmen wenigstens eines Mikrocomputers realisiert. Beispiele für solche Programme zeigen die Flussdiagramme der Figuren 3 und 4, die anhand eines bevorzugten Ausführungsbeispiels die Verbindungsaufforderung sowie den nachfolgenden Verbindungsaufbau darstellen.

Figur 3 zeigt dabei ein Realisierungsbeispiel für die Vorgehensweise im Server. Das skizzierte Programm wird abhängig von einer externen Anforderung gestartet. Diese Anforderung besteht beispielsweise aus einem Anruf über ein Telefon- oder Mobilfunknetz oder aus der Vorgabe eines entsprechenden Befehls mittels Internet. Daraufhin wird im ersten Schritt 100 eine Authentifizierung dieser Anforderung vorgenommen. Dies kann je nach Ausführung durch Überprüfung der anrufenden Telefonnummer, durch Identifizierungscodes und/oder Passwörter, etc. erfolgen. Ist die Authentifizierung nicht erfolgreich, wird der Vorgang abgebrochen und ggf. eine entsprechende Fehlermeldung abgesetzt. Ist die Authentifizierung erfolgreich, so wird im nächsten Schritt 102 die vorstehend beschriebene Verbindungsaufforderung mittels Datacall oder Anruf bei einem vorbestimmten Endgerätes vorgenommen. Die Telefonnummer bzw. die Adresse dieses Endgerätes wird abhängig von der Quelle der externen Anforderung beispielsweise aus einer Datenbank ausgelesen. Im nächsten Schritt wird überprüft, ob der Anruf bzw. der Datencall vom Empfänger (Endgerät) beendet wurde oder ob eine vorgesehene maximale Zeit bzw. maximale Anzahl von Anrufsversuchen abgelaufen ist. Ist Letzteres der Fall, ist davon auszugehen, dass der Anruf bzw. Datencall das Endgerät nicht erreicht hat. Das Programm wird in einem Ausführungsbeispiel unter Rückmeldung an den externen Anfordernden gemäß Schritt 106 abgebrochen oder mit Schritt 102 wiederholt, um eine neue Verbindungsaufforderung zu senden. Wurde der Anruf vom Endgerät jedoch beendet, wird im Schritt 108 überprüft, ob innerhalb einer maximalen Antwortzeit ein Verbindungsaufbau vom Endgerät zum Server hin stattgefunden hat. Ist dies nicht der Fall, so wird, gegebenenfalls unter Rückmeldung an den externen Anfordernden gemäß Schritt 110, der Vorgang abgebrochen. Findet der Verbindungsaufbau innerhalb einer maximalen Antwortzeit statt, so wird die für diesen Fall vorgesehene Kommunikation gemäß Schritt 112 mit dem Endgerät durchgeführt. In einem Ausführungsbeispiel besteht diese Kommunikation in einem Frage-Antwort-Spiel (Client-Server-Kommunikation), wobei der Server Daten zum Endgerät übermitteln oder vom Endgerät erhalten kann. So können z. B. nach einem Verbindungsaufbau, der zur Fernsteuerung von Komponenten im Fahrzeug dient, dem Endgerät Codes übermittelt werden, die dieses zum Steuern von Komponenten bzw. Funktionen des Fahrzeugs auswertet.

Figur 4 zeigt eine entsprechende Realisierung als Programm auf der Seite des Endgerätes. Dieses Endgerät besteht aus einer Mobilfunkeinheit und einer separaten oder in die Mobilfunkeinheit integrierten Verarbeitungseinheit, von deren Mikrocomputer die beschriebenen Überprüfungen und Aktionen durchgeführt werden.

Der in Figur 4 dargestellte Vorgang wird durch einen Anruf oder einen sogenannten Datencall im Endgerät aktiviert. Im ersten Schritt 200 wird überprüft, ob der Anruf bzw. der Datencall eine Anforderung für einen Verbindungsaufbau darstellt. Dies erfolgt je nach Ausführungsbeispiel aufgrund der Art des Anrufes (z. B. Datencall) und/oder aufgrund der mitgeteilten Telefonnummer des Anrufenden und/oder aufgrund eines übermittelten Codes. Ist der Anruf keine Verbindungsaufforderung, so wird gemäß Schritt 202 der Anruf an die Telefoneinheit des Endgerätes übermittelt und der Vorgang beendet. Die Telefoneinheit führt dann ggf. ein normales Telefongespräch durch.

Ist der Anruf bzw. der Datencall eine Aufforderung für einen Verbindungsaufbau im obigen Sinne, so wird gemäß Schritt 202 der Anruf vom Endgerät aus beendet. Sollen mit dem Anruf weitere Informationen übermittelt werden, wird der Anruf aufgenommen und es findet eine weitere Überprüfung auf der Basis der übermittelten Informationen statt, beispielsweise eine weitere Identifizierung anhand von Identifikationscodes, etc. Nach Abschluss dieser weiteren Überprüfung wird die Verbindung vom Endgerät her abgebrochen. Danach veranlasst das Endgerät einen erneuten Verbindungsaufbau zum Anrufenden bzw. zur Quelle des Datencalls. Ist diese Verbindung zustande gekommen, so findet gemäß Schritt 206 eine wie oben beschriebene Kommunikation zwischen Endgerät und Server statt. Gemäß Schritt 210 wird im Falle des Ausführungsbeispiels einer Fernsteuerung die gewünschte Aktion bzw. die gewünschten Aktionen durchgeführt bzw. veranlasst. Im Falle der Ferndiagnose werden die gewünschten Daten übermittelt. Je nach Umfang der Fragen werden die 206 und 210 wiederholt. Nach Abschluss der Kommunikation wird die Verbindung vorzugsweise vom Client her abgebrochen bzw. der Vorgang beendet.

Ein bevorzugtes Anwendungsbeispiel der geschilderten Vorgehensweise ist die Fahrzeugfernsteuerung bzw. die Fahrzeugferndiagnose. In diesem Fall umfasst das Fahrzeug eine Telematikeinheit mit Mobiltelefon und WAP-Browser. Über diese Einheit wird eine Internetverbindung hergestellt und WAP-Seiten werden aufgesucht (klassische Client-Server-Kommunikation). Die Telematikeinheit (Endgerät) wird im dargestellten Ausführungsbeispiel dazu verwendet, ferngesteuert im Fahrzeug wenigstens eine bestimmte Aktion auszuführen, beispielsweise eine Standheizung ein- oder auszuschalten. Um eine derartige Aktion auszulösen, setzt sich der Fahrzeugnutzer von beliebiger Stelle aus mit einem Server oder einem Service-Center, das die Fahrzeugkommunikation für diesen Vorgang handhabt, in Verbindung, beispielsweise über Internet, über WAP, telefonisch, etc., authentifiziert sich und teilt vorbestimmte Informationen mit. Beispielsweise kann er über SMS Codes übermitteln, die einer bestimmten Aktion entsprechen. Der Server führt bei korrekter Authentifizierung des Anrufers bzw. des Internet- oder WAP-Nutzers einen sogenannten Datencall an die Telematikeinheit in dem Fahrzeug durch. Dort wird der eingehende Anruf erkannt und die übermittelte Rufnummer mit den im Gerät abgespeicherten Rufnummern verglichen. Stimmen diese überein, so beendet die Telematikeinheit des Fahrzeugs umgehend den Anruf und baut eine Intemetverbindung auf. Anschließend wird eine ebenfalls im Gerät gespeicherte WAP-Adresseaufgesucht. Dies ist die Adresse des oben genannten Servers, im geschilderten Fall des Web-Servers, der auch die Verbindung initiiert hat. Die Kommunikation zwischen Telematikeinheit und Server zur Fahrzeugfernsteuerung ist damit aufgebaut. Es wird eine standardisierte Client-Server-Kommunikationsart, hier WAP, verwendet. In anderen Ausführungsbeispielen werden andere Standardkommunikationsarten eingesetzt, die für mobile Endgeräte geeignet sind. Nach Aufbau der Kommunikation erfolgt die Authentifizierung und Anmeldung des Clients beim Server. Besondere Sicherheitsmechanismen, im geschilderten bevorzugten Fall die aus WAP bekannten Sicherheitsmechanismen, werden dabei genutzt. Eine missbräuchliche Verwendung des Fahrzeugfernsteuerungsdienstes durch Unbefugte wird dadurch wirksam verhindert. Über die aufgebaute Kommunikationsverbindung werden alle für den Vorgang nötigen Daten ausgetauscht. Nach Abschluss dieses Austausches wird die Verbindung beendet und die Aktion im Fahrzeug durch die Telematikeinheit, insbesondere durch Senden entsprechender Befehl an ein oder mehrere Steuergeräte, ausgeführt.

Die geschilderte Vorgehensweise wird nicht nur in Verbindung mit der Fahrzeugfernsteuerung sondern auch in Verbindung mit Ferndiagnosevorgängen angewendet, bei denen vom Server gezielt Informationen aus den Fahrzeugen (beispielsweise Messwerte) abgerufen werden.

Die geschilderte Erfindung bezieht sich sowohl auf das Verfahren und das System in Gänze als auch jeweils gesondert auf Endgerät und Server, die dort ablaufenden Verfahren und eingesetzten Computerprogramme zur Durchführung der Verfahren.

Zusammenfassend ist festzustellen, dass ein wesentlicher Aspekt des beschriebenen Verfahrens bzw. der beschriebenen Vorrichtung die Tatsache ist, dass eine Client-Server Verbindung vom Server aus initiiert wird anstatt vom Client aus. Dazu wird ein telefonischer Anruf des Servers beim Client verwendet, der den Client zum Verbindungsaufbau auffordert.

## Patentansprüche

1. Verfahren zum Aufbau einer Kommunikationsverbindung zwischen einer Zentrale (1) und einem Endgerät (5), welches vorzugsweise in einem Kraftfahrzeug angeordnet ist, wobei das Endgerät (5) einen Anruf zur Anforderung zum Aufbau einer Verbindung empfängt, wobei das Endgerät (5) ferner auf Basis von Daten, die mit dem Anruf geliefert werden, überprüft, ob der Anruf dazu bestimmt ist und / oder berechtigt ist, einen Verbindungsaufbau mit der Zentrale (1) zu initiieren, wobei das Endgerät (5) eine Kommunikationsverbindung zu der Zentrale (1) automatisch aufbaut, wenn die Überprüfung ergeben hat, dass der Anruf dazu bestimmt ist und /oder berechtigt ist, eine Verbindung zur Zentrale (1) zu initiieren, wobei über die aufgebaute Kommunikationsverbindung Daten übertragen werden, **dadurch gekennzeichnet, dass** die Verbindungsanforderung im Endgerät (5) überprüft wird und bei einer Verbindungsanforderung, die dazu bestimmt ist und / oder berechtigt ist, einen Verbindungsaufbau mit der Zentrale (1) zu initiieren, ein Abbruch des Anrufs durch das Endgerät (5) erfolgt, wobei das Endgerät (5) den Anruf zur Aufforderung zum Aufbau einer Verbindung beendet, ohne ihn anzunehmen, und danach der Verbindungsaufbau vom Endgerät (5) aus erfolgt.

2. Verfahren nach Anspruch 1, **dadurch gekennzeichnet, dass** die Kommunikationsverbindung über ein Mobilfunknetz erfolgt und der Anruf einer der in der Spezifikation des Mobilfunkstandards spezifizierter Anruf ist, z.B. Telefonanruf, Datencall, etc.

3. Verfahren nach einem der vorhergehenden Ansprüche, **dadurch gekennzeichnet, dass** im Endgerät die eingehende Anforderung auf der Basis der Telefonnummer des Anfordernden und/oder auf der Basis von übermittelten Daten überprüft wird.

4. Verfahren nach einem der vorhergehenden Ansprüche, **dadurch gekennzeichnet, dass** der automatische Verbindungsaufbau durch Einwahl in ein Netzwerk durch das Endgerät erfolgt.

5. Verfahren nach einem der vorhergehenden Ansprüche, **dadurch gekennzeichnet, dass** die Kommunikation zwischen Endgerät und Zentrale nach Maßgabe einer standardisierten Client-Server-Kommunikationsart, beispielsweise WAP. stattfindet.

6. Vorrichtung zum Aufbau einer Kommunikationsverbindung zwischen einer Zentrale (1) und einem Endgerät (5), wobei über die aufgebaute Kommunikationsverbindung Daten gesendet werden, wobei das Endgerät (5) derart ausgestaltet ist, dass es:
- einen Anforderungsanruf der Zentrale (1), eine Verbindung aufzubauen, empfängt,
- auf der Basis von Daten, die über den Anruf geliefert werden, überprüft, ob der Anruf dazu bestimmt ist und/oder dazu berechtigt ist, eine Verbindung mit der Zentrale (1) zu initiieren und
- automatisch eine Kommunikationsverbindung zur Zentrale aufbaut, wenn die Überprüfung ergeben hat, dass der Anruf dazu bestimmt ist und/oder berechtigt ist, einen Verbindungsaufbau zu initiieren,
**dadurch gekennzeichnet, dass** das Endgerät (5) derart ausgestaltet ist, dass es:
- die Verbindungsanforderung überprüft und bei einer Verbindungsanforderung, die dazu bestimmt ist und / oder berechtigt ist, einen Verbindungsaufbau mit der Zentrale (1) zu initiieren, den Anruf abbricht, wobei es den Anruf zur Aufforderung zum Aufbau einer Verbindung beendet, ohne ihn anzunehmen, und danach eine Verbindung aufbaut.

## Claims

1. Method for setting up a communication link between an exchange (1) and a terminal (5) which is preferably arranged in a motor vehicle, the terminal (5) receiving a call for requesting the set up of a link, the terminal (5) further checking on the basis of data which are supplied with the call whether the call is intended and/or authorized to initiate setting up a link with the exchange (1), the terminal (5) automatically setting up a communication link to the exchange (1) when the result of checking is that the call is intended and/or authorized to initiate a link to the exchange (1), data being transmitted via the communication link set up, **characterized in that** the request for the link is checked in the terminal (5), and in the event of a request for a link which is intended and/or authorized to initiate setting up a link with the exchange (1), the call is disconnected by the terminal (5), the terminal (5) terminating the call for requesting the setup of a link without receiving it, and the link being set up thereafter from the terminal (5).

2. Method according to Claim 1, **characterized in that** the communication link is made via a mobile radio network, and the call is one of the calls specified in the specification of the mobile radio standard, for example telephone call, data call, etc.

3. Method according to one of the preceding claims, **characterized in that** in the terminal the incoming request is checked on the basis of the telephone number of the requester and/or on the basis of transmitted data.

4. Method according to one of the preceding claims, **characterized in that** the link is set up automatically by the terminal dialling into a network.

5. Method according to one of the preceding claims, **characterized in that** the communication between terminal and exchange takes place according to a standardized type of client/server communication, for example WAP.

6. Device for setting up a communication link between an exchange (1) and a terminal (5), data being sent via the communication link set up, the terminal (5) being configured in such a way that it:
- receives a request call from the exchange (1) to set up a link,
- checks, on the basis of data which are supplied via the call, as to whether the call is intended and/or authorized to initiate a link with the exchange (1), and
- automatically sets up a communication link to the exchange when the result of checking is that the call is intended and/or authorized to initiate setting up a link,
**characterized in that** the terminal (5) is configured in such a way that it:
- checks the request for a link and disconnects the call in the event of a request for a link which is intended and/or authorized to initiate setting up a link with the exchange (1), in which case it terminates the call for requesting the setup of a link, without receiving it, and thereafter sets up a link.

## Revendications

1. Procédé pour établir une liaison de communication entre une centrale (1) et un terminal (5) installé de préférence dans un véhicule automobile,
le terminal (5) reçoit un appel demandant l'établissement d'une liaison, le terminal (5) vérifie en outre sur le fondement des données qui lui sont fournies par l'appel, si l'appel est destiné et/ou autorisé à initialiser l'établissement d'une liaison avec la centrale (1),
le terminal (5) établit automatiquement une liaison de communication avec la centrale (1) si la vérification a montré que l'appel était destiné et/ou autorisé à initialiser une liaison vers la centrale (1), et
des données sont transmises par la liaison de communication ainsi établie,
**caractérisé en ce qu'**
on vérifie la demande de liaison dans le terminal (5) et, pour une demande de liaison destinée et/ou autorisée à initialiser l'établissement d'une liaison avec la centrale (1), il y aura une coupure de l'appel par le terminal (5), qui terminera l'appel de demande d'établissement d'une liaison sans accepter l'appel et ensuite la liaison s'établit à partir du terminal (5).

2. Procédé selon la revendication 1,
**caractérisé en ce que**
la liaison de communication se fait par un réseau de téléphones mobiles et l'appel est un appel spécifié selon la spécification du standard des téléphones mobiles, par exemple un appel téléphonique, un appel de données, etc..

3. Procédé selon les revendications précédentes,
**caractérisé en ce que**
la demande entrant dans le terminal est vérifiée sur le fondement du numéro de téléphone du demandeur et/ou sur le fondement des données transmises.

4. Procédé selon les revendications précédentes,
**caractérisé en ce que**
le terminal établit automatiquement la liaison par la sélection dans un réseau.

5. Procédé selon les revendications précédentes,
**caractérisé en ce que**
la communication entre le terminal et la centrale se produit selon la définition d'un type de communication standardisée client/serveur par exemple le protocole WAP.

6. Dispositif pour établir une liaison de communication entre une centrale (1) et un terminal (5), pour envoyer des données par la liaison de communication ainsi établie, le terminal (5) étant réalisé de façon à :
- recevoir un appel de requête de la centrale (1) pour établir une liaison,
- sur la base des données fournies par l'appel, il vérifie si l'appel est destiné et/ ou autorisé à initialiser une liaison avec la centrale (1), et
- il établit automatiquement une liaison de communication avec la centrale si la vérification a montré que l'appel était destiné et/ou autorisé à initialiser l'établissement d'une liaison,
**caractérisé en ce que**
le terminal (5) est réalisé de façon à :
- vérifier la demande de liaison et en cas de demande de liaison destinée ou autorisée à initialiser l'établissement d'une liaison avec la centrale (1), il coupe l'appel sans l'accepter ce qui termine l'appel de demande de l'établissement d'une liaison puis, il établit une liaison.
